# EUROPEAN PATENT SPECIFICATION

(11) **EP 0 672 735 B1**
(45) Date of publication and mention of the grant of the patent: **09.09.1998**
(21) Application number: 95301562.5
(22) Date of filing: 08.03.1995
(51) Int. Cl.: C09D 133/06, C09D 133/26

(54) **Coating with improved dirt pick-up resistance**
Überzug mit verbesserter Beständigkeit gegen Schmutzaufnahme
Revêtement ayant une résistance améliorée à la salissure

(30) Priority: 12.03.1994 GB 9404856
(43) Date of publication of application: 20.09.1995
(73) Proprietor: ROHM AND HAAS COMPANY, Philadelphia, Pennsylvania 19106-2399 (US)
(72) Inventor: Martorano, Richard, The Bay Court, Singapore 1646 (SG)
(74) Representative: Angell, David Whilton

(56) References cited:
- EP-A- 0 421 787
- GB-A- 826 652
- US-A- 3 749 690
- US-A- 4 129 545

## Description

The present invention relates to coatings having improved dirt pick-up resistance, particularly at high ambient temperatures and in high humidity.

After exposure to the atmosphere, exterior coatings tend to pick up particles of atmospheric dirt, which causes a slight discolouring of the coating with time. This problem is greater in hot and humid conditions when coatings are more tacky. It can be reduced by employing a polymer having a relatively high glass transition temperature (Tg); however, coatings containing high Tg polymers have other disadvantages such as lack of flexibility and a need for volatile organic coalescents to effect film formation, and thus a coating containing purely high Tg polymers is generally not desirable.

Another solution to the problem is to employ a two-stage polymer, having a low Tg portion and a high Tg one. US 5063091 discloses two-stage polymers for use as a thick elastomeric coating comprising methyl methacrylate, butyl acrylate and N-methylol methacrylamide. Such polymers are said to have relatively low tack at high temperatures, and thus good dirt pick-up resistance, despite at least one stage having a low glass transition temperature (Tg); this is due to the presence of the hard, high Tg phase. However, two stage polymers are more difficult to manufacture and are undesirable in certain applications because of problems caused by the incompatibility of the hard and soft phases. Furthermore, the coatings disclosed in US 5063091 are relatively thick, and are not suitable for all applications. Accordingly there is still a need for a single stage polymer which has a suitable dirt pick-up resistance without the attendant disadvantages of a very high Tg component.

US 3749690 discloses latex paints comprising an aqueous single-stage polymer emulsion of, *inter alia,* methacrylic acid, N-methylolacrylamide, ethyl acrylate and acrylonitrile. Such compositions are said to have a good spread of properties such as burnish resistance, scrub resistance, stain removal and low-temperature coalescence. There is no indication as to whether or not these compositions have good dirt pick-up resistance, particularly at high temperatures and at high humidity.

We have discovered that certain known single stage polymer compositions, despite having relatively low Tgs, provide coatings which exhibit surprisingly good dirt pick-up resistance, particularly in hot and humid conditions, compared with coatings based on compositions having significantly higher Tgs.

Accordingly the present invention comprises in one aspect the use of a single stage polymer comprising as polymerised monomer components:
N-methylol (meth)acrylamide, and one or more of alkyl acrylates, alkyl methacrylates, styrene, vinyl acetate and/or vinyl esters; and having a Tg of from -20°C to 40°C, to improve the dirt pickup resistance of a coating composition at a temperature of 25°C or higher and relative humidity of at least 80%.

The invention is especially valuable for improving the dirt pickup resistance of coating compositions in conditions of high ambient temperature (eg over 30°C) and high relative humidity (eg over 90%).

It is believed that the presence of the N-methylol (meth)acrylamide is responsible for the surprisingly good dirt pickup performance. Thus in a further aspect the invention provides a method of improving the dirt pickup resistance of an aqueous coating composition at a temperature of 25°C or higher and relative humidity of at least 80% which comprises incorporating into said composition a binder component consisting of a single-stage polymer having a Tg of from -20°C to 40°C and comprising polymerised monomer units of N-methylol (meth)acrylamide and one or more of alkyl acrylates, alkyl methacrylates, styrene, vinyl acetate and/or vinyl esters, and provided that said composition comprises no other mutually incompatible water-insoluble polymeric binder component.

The N-methylol (meth)acrylamide is generally present in the polymer composition at a level of from 1 to 15 % by weight, although more may be used if its presence is desired for other purposes.

Preferred polymer compositions for use in the invention comprise monomer units of N-methylol (meth)acrylamide, (C₁-C₈)alkyl acrylate and (C₁-C₄)alkyl methacrylate. More preferred are compositions comprising 1-6 % by weight N-methylol (meth)acrylamide, 20-70 % by weight (C₁-C₄)alkyl acrylate, and 20-70 % by weight (C₁-C₄)alkyl methacrylate.

It is also preferred that polymer compositions for use in the invention have a Tg of between 0 and 40°C, more preferably between 10 and 30°C.

### EXAMPLES

Coatings were prepared containing as binders three different compositions as specified below.

### Binder A:

Polymer of methyl methacrylate/ethyl acrylate/N-methylol acrylamide (45/51/4 wt%)

### Binder B:

Polymer of methyl methacrylate/butyl acrylate/N-methylol acrylamide (59.8/36.2/4 wt%)

### Binder C (comparative):

Polymer of methyl methacrylate/butyl acrylate/ureido-functional methacrylate/methacrylic acid (52.4/45.6/1/1 wt%)

The coatings had the following compositions (all weights in kg):

| | BINDER A | BINDER B | BINDER C |
|---|---|---|---|
| Grind preparation: | | | |
| Propylene glycol | 40 | 40 | 40 |
| Water | 130 | 130 | 130 |
| TAMOL 731 (25%) | 18 | 18 | 18 |
| NOPCO NXZ | 5 | 5 | 5 |
| PRIMAL QR-708 (35%) | 16.23 | 1.0 | 2.0 |
| HMT (10%) | 2.4 | 2.4 | 2.4 |
| SKANE M8 | 4.8 | 4.8 | 4.8 |
| KATHON LX 1.5 | 1 | 1 | 1 |
| TI-PURE R960 | 225 | 225 | 225 |
| Calcium carbonate | 125 | 125 | 125 |
| | | | |
| Ground for 15-20 minutes, then let down with the following: | | | |
| Binder | 485 (A) | 485 (B) | 442 (C) |
| Water | 42.24 | 42.24 | 100 |
| OPAQUE OP-62 | 135 | 135 | 135 |
| NOPCO NXZ | 2 | 2 | 2 |
| PRIMAL RM-1020 | 28 | 28 | 28 |
| TEXANOL | 34 | 34 | 22 |

The three coatings were coated on asbestos panels, which had been sealed with PRIMAL WL-91. Two coats were applied at intervals of 24 hours, and panels exposed to North (vertical) and South (vertical, at 5° and at 45°) in Singapore.

After one month's exposure, the panels containing Binders A and B were much cleaner than that containing C, with Binder A slightly better than B.

## Claims

1. Use of a single stage polymer comprising as polymerised monomer components:
N-methylol (meth)acrylamide, and one or more of alkyl acrylates, alkyl methacrylates, styrene, vinyl acetate and/or vinyl esters; and having a Tg of from -20°C to 40°C, to improve the dirt pickup resistance of a coating composition at a temperature of 25°C or higher and relative humidity of at least 80%.

2. Method of improving the dirt pickup resistance of an aqueous coating composition at a temperature of 25°C or higher and relative humidity of at least 80% which comprises incorporating into said composition a binder component consisting of a single-stage polymer having a Tg of from -20°C to 40°C and comprising polymerised monomer units of N-methylol (meth)acrylamide and one or more of alkyl acrylates, alkyl methacrylates, styrene, vinyl acetate and/or vinyl esters, and provided that said composition comprises no other mutually incompatible water-insoluble polymeric binder component.

3. Use or method according to claim 1 or 2 wherein the dirt pickup resistance is improved at temperatures of 30°C or higher, and a relative humidity of at least 90%.

4. Use or method according to any preceding claim wherein the Tg of the polymer is between 0 and 40°C.

5. Use or method according to claim 4 wherein the Tg of the polymer is between 10 and 30°C.

6. Use or method according to any preceding claim wherein the polymer comprises units of N-methylol (meth)acrylamide, (C₁-C₈)alkyl acrylate and (C₁-C₄)alkyl methacrylate.

7. Use or method according to any preceding claim wherein the N-methylol (meth)acrylamide is present in the polymer at a level of from 1 to 15 % by weight.

8. Use or method according to any preceding claim wherein the polymer comprises 1-6 % by weight N-methylol (meth)acrylamide, 20-70 % by weight (C₁-C₈)alkyl acrylate, and 20-70 % by weight (C₁-C₄)alkyl methacrylate.

9. Use or method according to any preceding claim wherein the polymer comprises units of N-methylol (meth)acrylamide, butyl or ethyl acrylate and methyl methacrylate.

## Patentansprüche

1. Verwendung von einem Einstufen-Polymer, umfassend als polymerisierte Monomer-Komponenten
N-Methylolmethacrylamid und ein oder mehrere Alkylacrylate, Alkylmethacrylate, Styrol, Vinylacetat und/oder Vinylester mit einer T_{g} von -20°C bis 40°C, zur Verbesserung der Schmutzaufnahmebeständigkeit einer Überzugszusammensetzung bei einer Temperatur von 25°C oder höher und einer relativen Feuchtigkeit von mindestens 80 %.

2. Verfahren zur Verbesserung der Schmutzaufnahmebeständigkeit einer wäßrigen Überzugszusammensetzung bei einer Temperatur von 25°C oder höher und einer relativen Feuchtigkeit von mindestens 80 %, welches das Zusetzen einer Binder-Komponente zu dieser Zusammensetzung, bestehend aus einem Einstufen-Polymer mit einer T_{g} von -20°C bis 40°C und umfassend polymerisierte Monomereinheiten von N-Methylolmethacrylamid und einem oder mehreren Alkylacrylaten, Alkylmethacrylaten, Styrol, Vinylacetat und/oder Vinylestern, umfaßt, mit der Maßgabe, daß diese Zusammensetzung keine andere gegenseitig unverträgliche wasserunlösliche polymere Binder-Komponente umfaßt.

3. Verwendung oder Verfahren nach Anspruch 1 oder 2, wobei die Schmutzaufnahmebeständigkeit bei Temperaturen von 30°C oder höher und einer relativen Feuchtigkeit von mindestens 90 % verbessert ist bzw. wird.

4. Verwendung oder Verfahren nach einem vorangehenden Anspruch, wobei die T_{g} des Polymers zwischen 0°C und 40°C liegt.

5. Verwendung oder Verfahren nach Anspruch 4, wobei die T_{g} des Polymers zwischen 10°C und 30°C liegt.

6. Verwendung oder Verfahren nach einem vorangehenden Anspruch, wobei das Polymer Einheiten von N-Methylolmethacrylamid, (C₁ - C₈)Alkylacrylat und (C₁ - C₄)Alkylmethacrylat umfaßt.

7. Verwendung oder Verfahren nach einem vorangehenden Anspruch, wobei das N-Methylolmethacrylamid im Polymer mit einem Gehalt von 1 bis 15 Gew.-% vorhanden ist.

8. Verwendung oder Verfahren nach einem vorangehenden Anspruch, wobei das Polymer 1 - 6 Gew.-% N-Methylolmethacrylamid, 20 - 70 Gew.-% (C₁ - C₈)Alkylacrylat und 20 - 70 Gew.-% (C₁ - C₄)Alkylmethacrylat umfaßt.

9. Verwendung oder Verfahren nach einem vorangehenden Anspruch, wobei das Polymer Einheiten von N-Methylolmethacrylamid, Butyl- oder Ethylacrylat und Methylmethacrylat umfaßt.

## Revendications

1. Utilisation d'un polymère à étage unique comprenant, en tant que composants monomères polymérisés :
du N-méthylol(méth)acrylamide, et un ou plusieurs composés parmi les acrylates d'alkyle, les méthacrylates d'alkyle, le styrène, l'acétate de vinyle et/ou les esters vinyliques ; et ayant une Tg de -20°C à 40°C, afin d'améliorer la résistance à la prise de salissures d'une composition de revêtement à une température de 25°C ou plus et sous une humidité relative d'au moins 80 %.

2. Procédé pour améliorer la résistance à la prise de salissures d'une composition aqueuse de revêtement à une température de 25°C ou plus et sous une humidité relative d'au moins 80 %, qui comprend l'incorporation, dans ladite composition, d'un composant liant constitué d'un polymère à étage unique ayant une Tg de -20°C à 40°C et comprenant des motifs monomères polymérisés de N-méthylol(méth)acrylamide et d'un ou plusieurs composés parmi les acrylates d'alkyle, les méthacrylates d'alkyle, le styrène, l'acétate de vinyle et/ou les esters vinyliques, et dans la mesure où ladite composition ne comprend pas d'autre composant liant polymère insoluble dans l'eau mutuellement incompatible.

3. Utilisation ou procédé selon la revendication 1 ou 2, dans lequel la résistance à la prise de salissures est améliorée à des températures de 30°C ou plus et sous une humidité relative d'au moins 90°C.

4. Utilisation ou procédé selon l'une quelconque des revendications précédentes, dans lequel la Tg du polymère est située dans l'intervalle entre 0 et 40°C.

5. Utilisation ou procédé selon la revendication 4, dans lequel la Tg du polymère est située dans l'intervalle entre 10 et 30°C.

6. Utilisation ou procédé selon l'une quelconque des revendications précédentes, dans lequel le polymère comprend des motifs de N-méthylol(méth)acrylamide, d'acrylate d'alkyle en C₁ à C₈ et de méthacrylate d'alkyle en C₁ à C₄.

7. Utilisation ou procédé selon l'une quelconque des revendications précédentes, dans lequel le N-méthylol(méth)acrylamide est présent dans le polymère en une quantité de 1 à 15 % en poids.

8. Utilisation ou procédé selon l'une quelconque des revendications précédentes, dans lequel le polymère comprend de 1 à 6 % en poids de N-méthylol(méth)acrylamide, de 20 à 70 % en poids d'aciylate d'alkyle en C₁ à C₈, et de 20 à 70 % en poids de méthacrylate d'alkyle en C₁ à C₄.

9. Utilisation ou procédé selon l'une quelconque des revendications précédentes, dans lequel le polymère comprend des motifs de N-méthylol(méth)acrylamide, d'acrylate de butyle ou d'éthyle, et de méthacrylate de méthyle.
